# EUROPÄISCHE PATENTANMELDUNG

(11) **EP 4 759 107 A1**
(43) Veröffentlichungstag der Anmeldung: **17.06.2026**
(21) Anmeldenummer: 25211948.2
(22) Anmeldetag: 29.10.2025
(51) Int. Cl.: A01B 63/22, A01D 78/10

(54) **HEUWERBUNGSMASCHINE UND VERFAHREN ZUM BETREIBEN DERSELBEN**

(30) Priorität: 16.12.2024 DE 102024137891
(71) Anmelder: CLAAS Saulgau GmbH, 88340 Bad Saulgau (DE)
(72) Erfinder: Fischer, Josef, 88400 Biberach (DE); Raach, Sebastian, 72539 Aichelau (DE)
(74) Vertreter: CLAAS Gruppe

(57) **Zusammenfassung**

Heuwerbungsmaschine (10), mit einem Tragrahmen (12), und mit mindestens einem um eine Kreiselachse (21) umlaufend antreibbaren, mit Rechzinken (20) bestückten Rechkreisel (11), der über eine Schwadglocke (18) an einem Ausleger (15) am Tragrahmen (12) schwenkbar befestigt ist und der durch ein Rechkreiselfahrwerk (22) mit Tast- und Stützrädern (23a, 23b) oder durch Gleitkufen auf einem zu bearbeitenden Untergrund bodenkopierend abstützbar ist. Die Heuwerbungsmaschine (10) weist Aktuatoren (26) auf, die eingerichtet sind, abhängig von einer von mindestens einem Sensor erfassten und/oder aus einer Topologiekarte entnommenen Bodenkontur einen Abstand der Tast- und Stützräder (23a, 23b) oder der Gleitkufen des jeweiligen Rechkreiselfahrwerks (22) zur jeweiligen Schwadglocke (18) einzustellen, um den Abstand der Rechzinken (20) des jeweiligen Rechkreisels (11) von dem zu bearbeitenden Untergrund einzustellen.

## Beschreibung

Die Erfindung betrifft eine Heuwerbungsmaschine nach dem Oberbegriff des Anspruchs 1. Des Weiteren betrifft die Erfindung ein Verfahren zum Betreiben einer Heuwerbungsmaschine.

Aus der Praxis sind Heuwerbungsmaschinen hinlänglich bekannt. So sind als Schwader sowie als Wender ausgebildete Heuwerbungsmaschinen bekannt.

EP 1 946 633 B1 offenbart eine Heuwerbungsmaschine mit mindestens einem Rechkreisel. Der jeweilige Rechkreisel weist Rechzinken auf, die an Rechzinkenträgern, die auch als Zinkenarme bezeichnet werden, angreifen. Der jeweilige Rechkreisel stützt sich im Betrieb über Tast- und Stützräder seines Rechkreiselfahrwerks auf einem zu bearbeitenden Untergrund ab. Um eine optimale Futterqualität zu gewährleisten, soll der Rechkreisel und damit seine Rechzinken in der Arbeitsstellung der Heuwerbungsmaschine einen definierten Abstand vom zu bearbeitenden Untergrund aufweisen, um so einen Eintrag von Erdreich in das Erntegut zu verhindern.

EP 4 124 236 B1 offenbart eine weitere Heuwerbungsmaschine.

Um im Betrieb den gewünschten, definierten Abstand der Rechzinken vom zu bearbeitenden Untergrund zu gewährleisten, nutzen Heuwerbungsmaschinen eine Bodenanpassung. Diese wird dadurch bereitgestellt, dass der jeweilige Rechkreisel über ein Kardangelenk an einem jeweiligen Ausleger gelagert ist. Abhängig von der Bodenabtastung über die Tast- und Stützräder kann sich der Rechkreisel über das Kardangelenk relativ zum Ausleger für eine Bodenanpassung verlagern. Hiermit ist zwar bereits in einem gewissen Umfang eine Bodenanpassung möglich, es besteht jedoch Bedarf daran, die Bodenanpassung einer Heuwerbungsmaschine noch weiter zu verbessern, um möglichst sämtliches Erntegut über die Rechkreisel zu erfassen, und zwar ohne dass Erdreich in das Erntegut eingetragen wird.

Diese Aufgabe wird durch einen Heuwerbungsmaschine nach Anspruch 1 und ein Verfahren nach Anspruch 12 gelöst.

Die erfindungsgemäße Heuwerbungsmaschine weist Aktuatoren auf, die eingerichtet sind, abhängig von der von mindestens einem Sensor erfassten und/oder in einer Topologiekarte verzeichneten Bodenkontur einen Abstand der Tast- und Stützräder des jeweiligen Rechkreisels von der jeweiligen Schwadglocke einzustellen, um den Abstand der Rechzinken des jeweiligen Rechkreisels von dem zu bearbeitenden Untergrund einzustellen.

Als Topologiekarte kann eine Karte vorgesehen werden, in der absolute Höhenangaben einer zu bearbeitenden Fläche verzeichnet sind oder alternativ eine Karte, die georeferenziert für jeden zu überfahrenden Flächenraster einen Offsetwert enthält, also Informationen über relative Geländeveränderungen, wie beispielsweise Bodenwellen, von Flächenraster zu Flächenraster.

Bei der erfindungsgemäßen Heuwerbungsmaschine wird die Bodenkontur des zu bearbeitenden Untergrunds mithilfe mindestens eines Sensors erfasst und/oder aus einer Topologiekarte entnommen.

Über die Aktuatoren der Heuwerbungsmaschine kann abhängig von der erfassten Bodenkontur der Abstand der Tast- und Stützräder des jeweiligen Rechkreiselfahrwerks des jeweiligen Rechkreisels von seiner jeweiligen Schwadglocke eingestellt werden, um den Abstand der Rechzinken des jeweiligen Rechkreisels vom zu bearbeitenden Untergrund abhängig von der Bodenkontur einzustellen.

Erfindungsgemäß wird eine Heuwerbungsmaschine bereitgestellt, bei welcher der jeweilige Rechkreisel ein aktives Rechkreiselfahrwerk aufweist, nämlich ein Rechkreiselfahrwerk mit Aktuatoren, die abhängig von einer durch mindestens einen Sensor erfassten Bodenkontur den Abstand der Rechzinken des jeweiligen Rechkreisel zu dem zu bearbeitenden Untergrund einstellen.

Vorzugsweise ist jeder Rechkreisel über seine Schwadglocke mit mindestens drei Tast- und Stützrädern seines jeweiligen Rechkreiselfahrwerks auf dem zu bearbeitenden Untergrund abstützbar, wobei über mindestens drei Aktuatoren des jeweiligen Rechkreiselfahrwerks des jeweiligen Rechkreisels der Abstand der Tast- und Stützräder des jeweiligen Rechkreiselfahrwerks des jeweiligen Rechkreisels zur jeweiligen Schwadglocke einstellbar ist. Über jeweilige translatorische Höheneinstellungen der verschiedenen Tast- und Stützräder gegenüber der Schwadglocke führt die Schwadglocke mit den daran angeordneten Rechzinkenträgern Nickbewegungen, Rollbewegungen und/oder Höhenänderungen gegenüber dem Boden aus. Durch diese Lagenänderungen der Ebene der Rechzinkenträger lassen sich die Abstände der Rechzinken zum zu bearbeitenden Untergrund einstellen. Hiermit ist abhängig von der Bodenkontur eine besonders vorteilhafte Bodenanpassung möglich.

Das Rechkreiselfahrwerk kann alternativ zu den Tast- und Stützrädern mit Gleitkufen ausgeführt werden. Diese können analog zu den Tast- und Stützrädern relativ zu der Schwadglocke in vertikaler Richtung verstellt werden, so dass die Schwadglocke sowohl eine translatorische Höhenverstellung als auch Rollbewegungen und Nickbewegungen relativ zum zu bearbeitenden Untergrund ausführen kann.

Über die Ansteuerung der drei Aktuatoren des Rechkreiselfahrwerks des jeweiligen Rechkreisels ist eine translatorische Höhenverstellung, eine Nickbewegung und eine Rollbewegung für die Schwadglocke des jeweiligen Rechkreisels bereitstellbar, um den Abstand der Rechzinken zum zu bearbeitenden Untergrund abhängig von der Bodenkontur exakt einzustellen.

Vorzugsweise weist das Rechkreiselfahrwerks des jeweiligen Rechkreisels mindestens drei Doppelschwingen auf, an welchen jeweils mindestens ein Tast- und Stützrad angreift, wobei mit jeder Doppelschwinge einer der Aktuatoren zusammenwirkt, um den Abstand der Tast- und Stützräder der jeweiligen Doppelschwinge zur jeweiligen Schwadglocke einzustellen. Hiermit ist eine noch bessere Bodenanpassung möglich.

Vorzugsweise ist der mindestens eine Sensor an einem Sicherheitsbügel des jeweiligen Rechkreisels angeordnet und/oder an dem Ausleger, an welchem der jeweilige Rechkreisel angreift, angeordnet und/oder an dem Rechkreiselfahrwerk des jeweiligen Rechkreisel angeordnet und/oder am Tragrahmen der Heuwerbungsmaschine angeordnet. Der mindestens eine Sensor ist eingerichtet, die Bodenkontur des zu bearbeitenden Untergrunds in Fahrtrichtung gesehen vor dem jeweiligen Rechkreisel zu erfassen. Der mindestens eine Sensor kann auch an einem Zugfahrzeug der Heuwerbungsmaschine angeordnet sein und/oder Bestandteil eine Drohne sein. An diesen Stellen kann der jeweilige Sensor, welcher die Bodenkontur des zu bearbeitenden Untergrunds erfasst, besonders vorteilhaft platziert werden.

Besonders vorteilhaft ist es, links und rechts sowie in der Mitte vor einem Rechkreisel einen Sensor vorzusehen, um die Bodenkontur mehrdimensional zu erfassen.

Vorzugsweise weist die erfindungsgemäße Heuwerbungsmaschine ein Steuergerät auf, welches eingerichtet ist, ein Messignal des mindestens einen Sensors zu empfangen und abhängig von dem Messignal des mindestens einen Sensors und/ oder abhängig von Informationen aus einer Topologiekarte die Aktuatoren anzusteuern. Das Steuergerät erfasst das Messsignal des mindestens einen Sensors und/oder die Bodenkontur aus der Toplogiekarte und steuert abhängig hiervon die Aktuatoren zur Bodenanpassung an.

Bevorzugte Weiterbildungen der Erfindung ergeben sich aus den Unteransprüchen und der nachfolgenden Beschreibung.

Ausführungsbeispiele der Erfindung werden, ohne hierauf beschränkt zu sein, anhand der Zeichnung näher erläutert. Dabei zeigt:
- Fig. 1: eine Draufsicht auf eine erfindungsgemäße Heuwerbungsmaschine mit einem Reckkreisel,
- Fig. 2: eine Seitenansicht der Heuwerbungsmaschine der Fig. 1,
- Fig. 3: eine Vorderansicht der Heuwerbungsmaschine der Fig. 1,
- Fig. 4: ein erstes Detail der Fig. 1 im Bereich von hinteren Tast- und Stützrädern,
- Fig. 5: ein zweites Detail der Fig. 1 im Bereich von vorderen Tast- und Stützrädern,
- Fig. 6: das Detail der Fig. 4 in einem anderen Zustand,
- Fig. 7: die Heuwerbungsmaschine der Fig. 1 bis 3 bei einer Bodenanpassung im Betrieb,
- Fig. 8: die Heuwerbungsmaschine der Fig. 1 bis 3 bei einer weiteren Bodenanpassung im Betrieb,
- Fig. 9: die Heuwerbungsmaschine der Fig. 1 bis 3 bei einer weiteren Bodenanpassung im Betrieb.

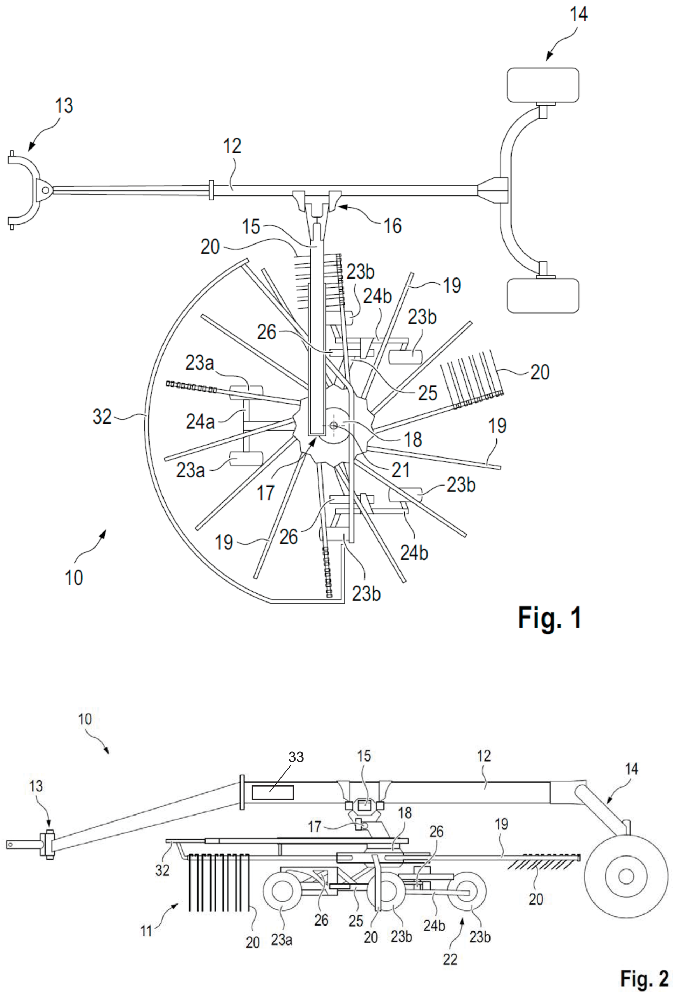

Die Erfindung betrifft eine Heuwerbungsmaschine 10, wobei Fig. 1 eine Heuwerbungsmaschine 10 mit einem einzigen Rechkreisel 11 zeigt.

Typischerweise weist eine Heuwerbungsmaschine 10 mehrere Rechkreisel 11 auf, zum Beispiel zwei, vier oder sechs Rechkreisel 11. Bei der Heuwerbungsmaschine 10 handelt es sich vorzugsweise um einen Schwader.

Die Heuwerbungsmaschine 10 verfügt über einen Tragrahmen 12, wobei in Fig. 1 an einem Ende des Tragrahmens 12 eine Ankoppeleinrichtung 13 und an einem gegenüberliegenden Ende des Tragrahmens 12 ein Hauptfahrwerk 14 der Heuwerbungsmaschine 10 angreift.

Über die Ankoppeleinrichtung 13 kann die Heuwerbungsmaschine 10 an ein Zugfahrzeug angekoppelt werden.

Über das Hauptfahrwerk 14 stützt sich die Heuwerbungsmaschine 10 sowohl in einer Arbeitsstellung als auch in einer Transportstellung auf einem Untergrund ab.

Der in Fig. 1 gezeigte Rechkreisel 11 greift an einem Ausleger 15 an. Der Ausleger 15 weist an einem ersten Ende ein Gelenk 16 auf, um welches derselbe relativ zum Tragrahmen 12 schwenkbar ist. Der Rechkreisel 11 greift an einem zweiten Ende des Auslegers 15 über ein Kardangelenk 17 an, welches eine Kippbewegung des Rechkreisels 11 in Längsrichtung und Querrichtung der Heuwerbungsmaschine 10 zulässt.

Der Rechkreisel 11 bzw. der jeweilige Rechkreisel 11 verfügt über eine sogenannte Schwadglocke 18, in der ein Schwadgetriebe angeordnet ist. An der Schwadglocke 18, insbesondere am Schwadgetriebe, sind mehrere Rechzinkenträger 19 befestigt, die auch als Zinkenarme bezeichnet werden. An den Rechzinkenträgern 19 greifen die Rechzinken 20 an. In der Arbeitsstellung der Heuwerbungsmaschine 10 bzw. des jeweiligen Rechkreisels 11 ist der jeweilige Rechkreisel 11, nämlich seine Schwadglocke 18, zusammen mit den Rechzinkenträgern 19 und Rechzinken 20 um eine sich in Hochrichtung bzw. Vertikalrichtung erstreckende Drehachse bzw. Kreiselachse 21 drehbar. Das Schwadgetriebe steuert während der Drehbewegung des Rechkreisels 11 die Stellung der Rechzinkenträger 19 bzw. der Rechzinken im Hinblick auf eine Arbeitsposition oder eine Nichtarbeitsposition.

Der jeweilige Rechkreisel 11 weist weiterhin ein Rechkreiselfahrwerk 22 auf. Das Rechkreiselfahrwerk 22 verfügt über Tast- und Stützräder 23, über welche sich der jeweilige Rechkreisel 11 in der Arbeitsstellung auf einem zu bearbeitenden Untergrund bodenkopierend abstützt.

Im gezeigten Ausführungsbeispiel weist das Rechkreiselfahrwerk 22 des jeweiligen Rechkreisels 11 insgesamt sechs Tast- und Stützräder 23a, 23b auf, nämlich zwei in Fahrtrichtung vorne liegende Tast- und Stützräder 23a und vier in Fahrtrichtung hinten liegende Tast- und Stützräder 23b.

Die beiden in Fahrtrichtung vorne liegenden Stützräder 23a sind an einer sich in Querrichtung erstreckenden vorderen Doppelschwinge 24a und jeweils zwei der hinteren Tast- und Stützräder 23b an einer sich in Längsrichtung erstreckenden hinteren Doppelschwinge 24b befestigt. Die an der jeweiligen hinteren Doppelschwinge 24b befestigten Paare von hinteren Tast- und Stützrädern 23b sind in Querrichtung nebeneinander angeordnet.

Die Doppelschwingen 24a, 24b werden auch als Pendelachsen bezeichnet. Obwohl im gezeigten Ausführungsbeispiel insgesamt sechs Tast- und Stützräder 23a, 23b vorhanden sind, ist es auch möglich, dass das Rechkreiselfahrwerk 22 des jeweiligen Rechkreisels 11 lediglich drei Tast- und Stützräder aufweist, insbesondere ein vorderes Tast- und Stützrad 23a sowie zwei hintere Stützräder 23b, die in Querrichtung nebeneinander angeordnet sind.

Im gezeigten Ausführungsbeispiel greifen die Doppelschwingen 24a, 24b, an welchen die Tast- und Stützräder 23a, 24b angreifen, an einem Rahmen 25 des Rechkreiselfahrwerks 22 des jeweiligen Rechkreisels 11 an.

Die erfindungsgemäße Heuwerbungsmaschine 10 weist Aktuatoren 26 auf, die eingerichtet sind, abhängig von einer Bodenkontur einen Abstand der Tast- und Stützräder 23a, 23b zur jeweiligen Schwadglocke 18 einzustellen. Damit kann die Ausrichtung der Schwadglocke 18 gegenüber dem Untergrund verändert werden, wodurch sich die Abstände der Rechzinken 20 des jeweiligen Rechkreisels 11 zum zu bearbeitenden Untergrund einstellen. Der jeweilige Rechkreisel 11 weist demnach ein aktives Rechkreiselfahrwerk 22 auf, derart, dass die Aktuatoren 26 abhängig von der Bodenkontur des zu bearbeitenden Untergrunds auf die Tast- und Stützräder 23a, 23b ziehend oder drückend einwirken, um so den Abstand der Tast- und Stützräder 23a, 23b des jeweiligen Rechkreisels 11 zur jeweiligen Schwadglocke 18 und so den Abstand der Rechzinken 20 des jeweiligen Rechkreisels 11 zu dem zu bearbeitenden Untergrund einzustellen. Die Bodenkontur kann dabei sensorisch erfasst und/oder aus einer Topologiekarte entnommen werden.

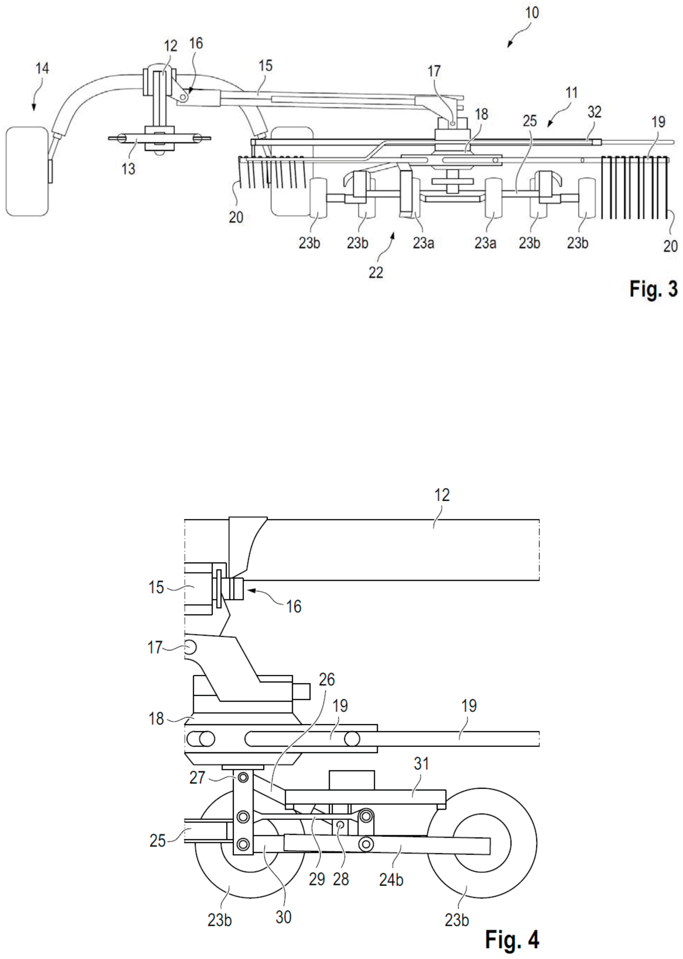

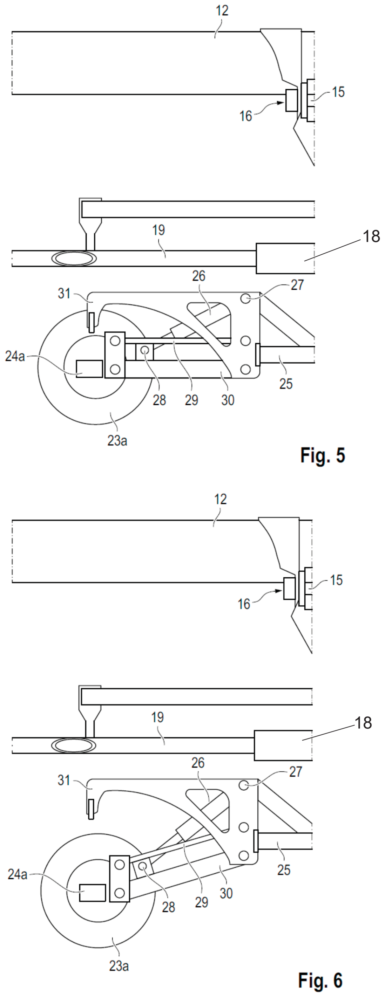

Jeder Rechkreisel 11 weist drei Aktuatoren 26 auf. Diese Aktuatoren 26 sind vorzugsweise als Hydraulikzylinder ausgeführt. Im gezeigten Ausführungsbeispiel wirkt mit jedem Paar von Tast- und Stützrädern 23a, 23b, die an einer gemeinsamen Doppelschwinge 24a, 24b angreifen, jeweils ein Aktuator 26. Fig. 4 zeigt einen Aktuator 26, der mit einem Paar hinterer Tast- und Stützräder 23b, die an der Doppelschwinge 24b angreifen, zusammenwirkt. Fig. 5 und 6 zeigen den Aktuator 26, der mit den an der Doppelschwinge 24a angreifenden vorderen Tast- und Stützrädern 23a zusammenwirkt. Fig. 5 und 6 zeigen dabei das jeweilige Detail aus der Heuwerbungsmaschine 10 in unterschiedlichen Zuständen, wobei in Fig. 6 der Abstand der Tast- und Stützräder 23a zur Schwadglocke 18 in vertikaler Richtung gesehen größer ist als in Fig. 5.

Jeder der Aktuatoren 26 greift einerseits mit einem Ende 27 gelenkig am Rahmen 25 des Rechkreiselfahrwerks 22 des jeweiligen Rechkreisels 11 und mit einem gegenüberliegenden Ende 28 gelenkig an einer Parallelkinematik an, über die die jeweilige Doppelschwinge 24a, 24b am Rahmen 25 des Rechkreiselfahrwerks 22 des jeweiligen Rechkreisels 11 angebunden ist. Diese Parallelkinematik verfügt über zwei parallel zueinander verlaufende Lenker 29, 30, die mit ihren Enden jeweils gelenkig einerseits am Rahmen 25 und andererseits an der jeweiligen Doppelschwinge 24a, 24b angreifen. Die zwei parallel zueinander verlaufende Lenker 29, 30 der jeweiligen Parallelkinematik des jeweiligen Rechkreiselfahrwerks 22 des jeweiligen Rechkreisels 11 stellen ein Viergelenk bereit.

Über den jeweiligen Aktuator 26 kann die die Lenker 29, 30 umfassende Parallelkinematik verschwenkt werden, um so die an der jeweiligen Doppelschwinge 24a, 24b angreifenden Tast- und Stützräder 23a, 23b entweder stärker in Richtung auf die Schwadglocke 18 zu ziehen oder weiter von der Schwadglocke 18 wegzudrücken - jeweils in vertikaler Richtung betrachtet.

Jeder Aktuator 26 wirkt individuell auf die jeweilige Doppelschwinge 24a, 24b und damit individuell auf die an der jeweiligen Doppelschwinge 24a, 24b angreifenden Tast- und Stützräder 23a, 23b ein. So kann die Schwadglocke 18 zusammen mit den Rechzinkenträgern 19 sowohl eine translatorische Höhenverstellung als auch eine Nickbewegung sowie Rollbewegung relativ zum zu bearbeitenden Untergrund ausführen. Wirken alle Aktuatoren 26 gleichwirkend auf die Doppelschwingen 24a, 24b und so auf alle Tast- und Stützräder 23a, 23b ein, so kann eine translatorische Höhenverstellung der Schwadglocke 18 und damit für die Rechzinken 20 bereitgestellt werden. Werden hingegen die Aktuatoren 26 unterschiedlich angesteuert, so kann auch eine Nickbewegung und/oder Rollbewegung für die Schwadglocke 18 und damit eine Abstandsänderung der Rechzinken 20 relativ zum zu bearbeitenden Untergrund gewährleistet werden. Wird zum Beispiel lediglich der mit der in Fahrtrichtung vorne liegenden Doppelschwinge 24 und damit der auf die vorderen Tast- und Stützräder 23a einwirkende Aktuator 26 verstellt, so kann eine Nickbewegung bereitgestellt werden. Wird lediglich einer der Aktuatoren 26 verstellt, der auf die an den in Fahrtrichtung gesehen hinteren Doppelschwingen 24b gelagerten Tast- und Stützräder 23b einwirkt, so kann eine Rollbewegung bereitgestellt werden.

Fig. 4 zeigt für die dort gezeigten hinteren Tast- und Stützräder 23b bzw. für deren Doppelschwinge 24b und Fig. 5 und 6 zeigen für die vorderen Tast- und Stützräder 23a bzw. deren Doppelschwinge 24a einen Anschlag 31, welcher die Verlagerung der jeweiligen Tast- und Stützräder 23a, 23b relativ zur Schwadglocke 18 begrenzt. Dadurch wird vorteilhat verhindert, dass die Tast- und Stützräder 23a, 23b mit der Schwadglocke 18 oder den Rechzinkenträgern 19 kollidieren.

Wie bereits ausgeführt, dienen die Aktuatoren 26 dazu, den Abstand der jeweiligen Tast- und Stützräder 23a, 23b zur Schwadglocke 18 in vertikaler Richtung einzustellen, und zwar abhängig von der Bodenkontur des zu bearbeitenden Untergrunds, um so den Abstand der Rechzinken 20 zum zu bearbeitenden Untergrund einzustellen.

Die Bodenkontur des zu bearbeitenden Untergrunds kann durch mindestens einen Sensor erfasst werden. Dieser Sensor ist in den Figuren nicht gezeigt.

Alternativ kann die Bodenkontur aus einer Topologiekarte entnommen werden.

Es ist möglich, mindestens einen Sensor, welcher der Erfassung der Bodenkontur des zu bearbeitenden Untergrunds dient, an einem Sicherheitsbügel 32 des jeweiligen Rechkreisels 11 anzuordnen. Dieser ist dann vorzugsweise in der Mitte des Sicherheitsbügels 32 angeordnet, möglichst weit vorne liegend in der Fahrtrichtung der Heuwerbungsmaschine 10, um so die vor dem jeweiligen Rechkreisel 11 liegende Bodenkontur gut zu erfassen.

Ein Sensor, welcher der Erfassung der Bodenkontur des zu bearbeitenden Untergrunds dient, kann auch am Tragrahmen 12 der Heuwerbungsmaschine 10 angreifen, vorzugsweise benachbart zur Ankoppeleinrichtung 13. Auch kann ein solcher Sensor, welcher der Erfassung der Bodenkontur des zu bearbeitenden Untergrunds dient, an einem Ausleger 15 angreifen, vorzugsweise an einer Position des Auslegers 15, die in der Arbeitsposition möglichst weit außen in der Nähe der Drehachse bzw. Kreiselachse 21 des jeweiligen Rechkreisels 11 liegt.

Auch kann ein solcher Sensor, welcher der Erfassung der Bodenkontur des zu bearbeitenden Untergrunds dient, am Rechkreiselfahrwerk 22 des jeweiligen Rechkreisels 11 angreifen, zum Beispiel an der in Fahrtrichtung vorne liegenden Doppelschwinge 24a der in Fahrtrichtung vorne liegenden Tast- und Stützräder 23a. Ein solcher Sensor muss dazu eingerichtet sein, die vor dem Rechkreiselfahrwerk 22 liegende Bodenkontur erfassen zu können.

Auch kann für einen solchen Sensor, welcher der Erfassung der Bodenkontur des zu bearbeitenden Untergrunds dient, eine separate Halterung an der Heuwerbungsmaschine 10 vorgesehen sein. Der jeweilige Sensor, welcher die Bodenkontur erfasst und an der Heuwerbungsmaschine 10 angeordnet ist, kann so zum Beispiel ein Radarsensor, Lidarsensor, Ultraschallsensor oder dergleichen sein.

Auch ist es möglich, dass ein solcher Sensor zur Erfassung der Bodenkontur des zu bearbeitenden Untergrunds einem Zugfahrzeug der Heuwerbungsmaschine 10 zugeordnet ist. Auch kann ein solcher Sensor zur Erfassung der Bodenkontur des zu bearbeitenden Untergrunds Bestandteil einer Drohne sein, die bei der Bearbeitung des Untergrunds über dem Untergrund fliegt und dessen Bodenkontur erfasst.

Unabhängig davon, wo nun der Sensor zur Erfassung der Bodenkontur des zu bearbeitenden Untergrunds angeordnet ist oder ob die Bodenkontur aus einer Topologiekarte entnommen wird, ist erfindungsgemäß vorgesehen, dass die Aktuatoren 26 des jeweiligen Rechkreisels 11 abhängig von der Bodenkontur des zu bearbeitenden Untergrunds, auf die Tast- und Stützräder 23a, 23b des jeweiligen Rechkreisels 11, im gezeigten Ausführungsbeispiel auf die Doppelschwingen 24a, 24b des jeweiligen Rechkreisels 11 einwirken, um letztendlich den Abstand der Rechzinken 20 des jeweiligen Rechkreisels 11 vom zu bearbeitenden Untergrund optimal einzustellen, sodass möglichst viel Erntegut von den Rechzinken 20 erfasst wird, ohne jedoch Boden in das Erntegut einzubringen.

Vorzugsweise umfasst die Heuwerbungsmaschine 10 ein Steuergerät 33 (Fig. 2), welches eingerichtet ist, das Messsignal des mindestens einen Sensors, der die Bodenkontur des zu bearbeitenden Untergrunds erfasst, zu empfangen und welches ferner eingerichtet ist, das Messsignal des mindestens einen Sensors auszuwerten und abhängig hiervon oder abhängig von den Informationen aus einer Topologiekarte, die Aktuatoren 26 des mindestens einen Rechkreisels 11 anzusteuern.

Die Ansteuerung der Aktuatoren 26 des jeweiligen Rechkreisels 11 kann dabei auch abhängig von einem Lenkwinkel des Zugfahrzeugs und/oder der Heuwerbungsmaschine und/oder abhängig von GPS-Daten und/oder abhängig vom Messsignal eines Neigungssensors sein.

Das Steuergerät kann dazu eingerichtet sein, die Aktuatoren 26 im Sinne einer Steuerung oder im Sinne einer Regelung anzusteuern.

Bei einer Steuerung wird abhängig von den Informationen einer Topologiekarte oder abhängig vom Messsignal des mindestens einen Sensors, welcher die Bodenkontur erfasst, sowie ggf. abhängig vom Lenkwinkel und/oder GPS-Daten und/oder von einem Messsignal eines Neigungssensors, eine Stellgröße für die Aktuatoren 26 des jeweiligen Rechkreisels 11 bestimmt, in Abhängigkeit derer dann die Aktuatoren 26 angesteuert werden, ohne jedoch zu überwachen, welcher Ist-Abstand der Rechzinken 20 relativ zum zu bearbeitenden Untergrund sich tatsächlich ausbildet.

Bei einer Regelung hingegen wird der sich abhängig von der Ansteuerung der Aktuatoren 26 an den Rechzinken 20 ausbildende Ist-Abstand derselben zum zu bearbeitenden Untergrund ermittelt, um diesen Ist-Abstand mit einem regelungstechnisch vorgegebenen Soll-Abstand zu vergleichen und abhängig von der Abweichung zwischen dem Ist-Abstand und dem Soll-Abstand die Aktuatoren 26 des jeweiligen Rechkreisels 11 so anzusteuern, dass der Ist-Abstand der Rechzinken 20 des jeweiligen Rechkreisels 11 von dem zu bearbeitenden Untergrund dem Soll-Abstand angenähert wird.

Die Ermittlung des Ist-Abstands der Rechzinken 20 des jeweiligen Rechkreisels 11 vom zu bearbeitenden Untergrund kann auf Informationen einer Topologiekarte basierend oder mithilfe einer geeigneten Sensorik erfolgen, so zum Beispiel mithilfe von Radarsensoren, Lidarsensoren oder dergleichen.

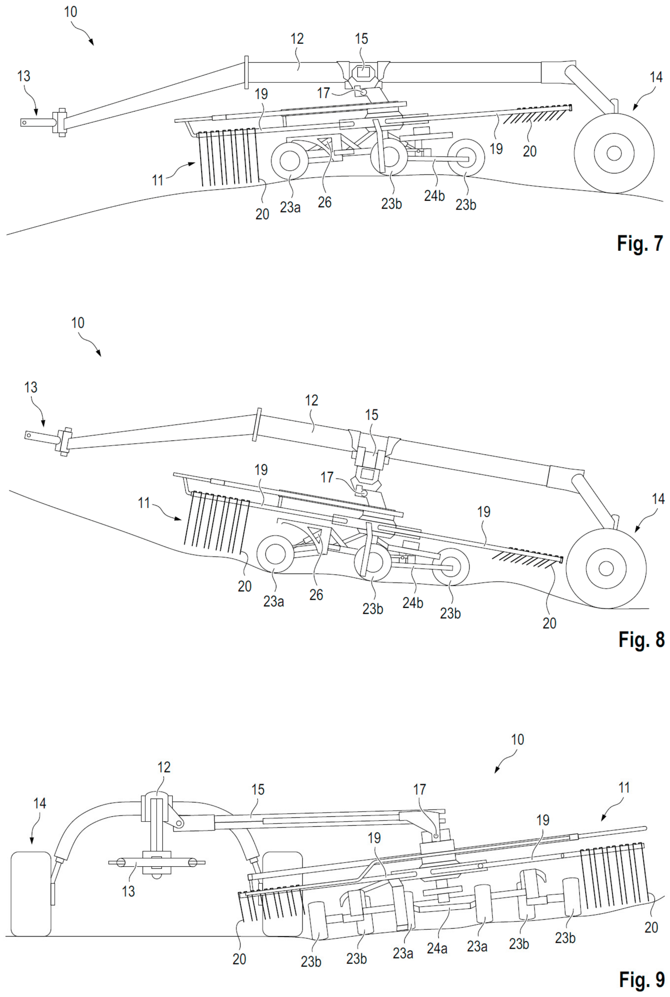

Mit der Erfindung ist selbst bei stark unebenem Untergrund eine optimale Bodenanpassung möglich, sodass möglichst viel Erntegut vom jeweiligen Rechkreisel 11 erfasst wird, ohne Boden in das Erntegut einzubringen. Fig. 7, 8 und 9 zeigen die Heuwerbungsmaschine 10 der Fig. 1 bis 3 in unterschiedlichen Geländeformationen eines zu bearbeitenden Untergrunds.

Wie bereits ausgeführt, kann über die Aktuatoren 26, die abhängig von einer erfassten Bodenkontur des zu bearbeitenden Untergrunds angesteuert werden, der Abstand der Rechzinken 20 des jeweiligen Rechkreisels 11 zum zu bearbeitenden Untergrund exakt eingestellt werden.

Die Erfindung betrifft weiterhin ein Verfahren, um eine erfindungsgemäße Heuwerbungsmaschine 10 zu betreiben. Beim erfindungsgemäßen Verfahren wird die Bodenkontur des zu bearbeitenden Untergrunds erfasst, und zwar mithilfe mindestens eines Sensors oder einer Topologiekarte entnommen. Abhängig von der von dem mindestens einen Sensor erfassten Bodenkontur wird der Abstand der Tast- und Stützräder 23a, 23b des jeweiligen Rechkreisels 11 der Heuwerbungsmaschine 10 zur jeweiligen Schwadglocke 18 eingestellt, und zwar mithilfe der Aktuatoren 26, um so den Abstand der Rechzinken 20 des jeweiligen Rechkreisels 11 von dem zu bearbeitenden Untergrund abhängig von der Bodenkontur einzustellen.

Das erfindungsgemäße aktive Rechkreiselfahrwerk kann den Abstand der Rechzinken 20 zum zu bearbeitenden Untergrund auch zusätzlich abhängig von der Menge des zu verarbeitenden Ernteguts regeln.

Bei einer erfindungsgemäßen Heuwerbungsmaschine 10 können verschiedene Fahrmodi vorgesehen werden. Es kann beispielsweise ein Fahrmodus vorgesehen werden, der mehr Rechverluste zulässt, also Erntegut auf dem Untergrund zurücklässt, aber dafür saubereres Erntegut mit weniger Rohaschegehalt erntet. Ebenso kann ein Fahrmodus vorgesehen werden, der einen häufigeren Bodenkontakt der Rechzinken 20 zulässt und dabei mit geringeren Ernteverlusten arbeitet, aber Erntegut mit einem ggf. höheren Rohaschegehalt erntet.

### Bezugszeichenliste

- 10: Heuwerbungsmaschine
- 11: Rechkreisel
- 12: Tragrahmen
- 13: Ankoppeleinrichtung
- 14: Hauptfahrwerk
- 15: Ausleger
- 16: Gelenk
- 17: Kardangelenk
- 18: Schwadglocke
- 19: Rechzinkenträger
- 20: Rechzinken
- 21: Kreiselachse
- 22: Rechkreiselfahrwerk
- 23a: Tast- und Stützrad
- 23b: Tast- und Stützrad
- 24a: Doppelschwinge
- 24b: Doppelschwinge
- 25: Rahmen
- 26: Aktuator
- 27: Ende
- 28: Ende
- 29: Lenker
- 30: Lenker
- 31: Anschlag
- 32: Sicherheitsbügel
- 33: Steuergerät

## Patentansprüche

1. Heuwerbungsmaschine (10),
mit einem Tragrahmen (12),
mit mindestens einem um eine Kreiselachse (21) umlaufend antreibbaren, mit Rechzinken (20) bestückten Rechkreisel (11), der an einer Schwadglocke (18) über einen Ausleger (15) am Tragrahmen (12) schwenkbar befestigt ist und der durch ein Rechkreiselfahrwerk (22) mit Tast- und Stützrädern (23a, 23b) oder durch Gleitkufen auf einem zu bearbeitenden Untergrund bodenkopierend abstützbar ist,
**gekennzeichnet durch**
Aktuatoren (26), die eingerichtet sind, abhängig von einer von mindestens einem Sensor erfassten oder aus einer Topologiekarte entnommenen Bodenkontur einen Abstand der Tast- und Stützräder (23a, 23b) oder Gleitkufen des jeweiligen Rechkreiselfahrwerks (22) zur jeweiligen Schwadglocke (18) einzustellen, um den Abstand der Rechzinken (20) des jeweiligen Rechkreisels (11) von dem zu bearbeitenden Untergrund einzustellen.

2. Heuwerbungsmaschine (10) nach Anspruch 1, **dadurch gekennzeichnet, dass** jeder Rechkreisel (15) über mindestens drei Tast- und Stützräder (23a, 23b) oder mindestens drei Gleitkufen seines jeweiligen Rechkreiselfahrwerks (22) auf dem zu bearbeitenden Untergrund abstützbar ist, und dass über mindestens drei Aktuatoren (26) des Rechkreiselfahrwerks (22) des jeweiligen Rechkreisels (11) der Abstand der Tast- und Stützräder (23qa, 23b) oder der Gleitkufen des jeweiligen Rechkreiselfahrwerks (22) zur jeweiligen Schwadglocke (18) einstellbar ist, um über eine translatorische Höhenverstellung und/oder eine Nickbewegung und/oder eine Rollbewegung der Schwadglocke (18) des jeweiligen Rechkreisels (11) den Abstand der Rechzinken (20) von dem zu bearbeitenden Untergrund einzustellen.

3. Heuwerbungsmaschine (10) nach Anspruch 2, **dadurch gekennzeichnet, dass** das Rechkreiselfahrwerk (22) des jeweiligen Rechkreisels (11) mindestens drei Doppelschwingen (24a, 24b) aufweist, an welchen jeweils mindestens ein Tast- und Stützrad (23a, 23b) angreift, wobei mit jeder Doppelschwinge (24a, 24b) einer der Aktuatoren (26) zusammenwirkt, um den Abstand der Tast- und Stützräder (23a, 23b) der jeweiligen Doppelschwinge (24a, 24b) zur jeweiligen Schwadglocke (18) einzustellen.

4. Heuwerbungsmaschine (10) nach einem der Ansprüche 1 bis 3, **dadurch gekennzeichnet, dass** der mindestens eine Sensor an einem Sicherheitsbügel (32) des jeweiligen Rechkreisels (11) und/oder an dem Ausleger (15), an welchem der jeweiligen Rechkreisel (11) angreift, und/oder an dem Rechkreiselfahrwerk (22) des jeweiligen Rechkreisels (11) und/oder am Tragrahmen (12) der Heuwerbungsmaschine (10) angeordnet ist.

5. Heuwerbungsmaschine (10) nach einem der Ansprüche 1 bis 4, **dadurch gekennzeichnet, dass** der mindestens eine Sensor an einem Zugfahrzeug der Heuwerbungsmaschine (10) angeordnet ist.

6. Heuwerbungsmaschine (10) nach einem der Ansprüche 1 bis 5, **dadurch gekennzeichnet, dass** der mindestens eine Sensor Bestandteil eine Drohne ist.

7. Heuwerbungsmaschine (10) nach einem der Ansprüche 1 bis 6, **dadurch gekennzeichnet, dass** der mindestens eine Sensor eingerichtet ist, die Bodenkontur des zu bearbeitenden Untergrunds in Fahrtrichtung gesehen vor dem jeweiligen Rechkreisel (11) zu erfassen.

8. Heuwerbungsmaschine (10) nach einem der Ansprüche 1 bis 7, **gekennzeichnet durch** ein Steuergerät, welches eingerichtet ist, ein Messignal des mindestens einen Sensors zu empfangen oder die Bodenkontur aus einer Topologiekarte zu entnehmen und abhängig von der Bodenkontur die Aktuatoren (26) anzusteuern.

9. Heuwerbungsmaschine (10) nach Anspruch 8, **dadurch gekennzeichnet, dass** das Steuergerät eingerichtet ist, die Aktuatoren (26) abhängig von einem Lenkwinkel und/oder abhängig von GPS-Daten und/oder abhängig vom Messignal eines Neigungssensors anzusteuern.

10. Heuwerbungsmaschine (10) nach Anspruch 8 oder 9, **dadurch gekennzeichnet, dass** das Steuergerät eingerichtet ist, die Aktuatoren (26) im Sinne einer Steuerung oder im Sinne einer Regelung anzusteuern.

11. Heuwerbungsmaschine (10) nach einem der vorangehenden Ansprüche, **dadurch gekennzeichnet, dass** wenigstens ein Anschlag (31) vorgesehen ist, welcher die Verlagerung der jeweiligen Tast- und Stützräder (23a, 23b) relativ zur Schwadglocke (18) begrenzt.

12. Verfahren zur zum Betreiben einer Heuwerbungsmaschine nach einem der Ansprüche 1 bis 11, mit folgenden Schritten
Erfassen der Bodenkontur des zu bearbeitenden Untergrunds,
abhängig von der erfassten Bodenkontur Einstellen des Abstands der Tast- und Stützräder (23a, 23b) des jeweiligen Rechkreiselfahrwerks (22) des jeweiligen Rechkreisels (11) zur jeweiligen Schwadglocke (18), um den Abstand der Rechzinken (22) des jeweiligen Rechkreisels (11) von dem zu bearbeitenden Untergrund einzustellen.
